# EUROPEAN PATENT APPLICATION

(11) **EP 1 480 134 A2**
(43) Date of publication of application: **24.11.2004**
(21) Application number: 04012197.2
(22) Date of filing: 24.05.2004
(51) Int. Cl.: G06F 17/30

(54) **System and method for logging actions for transformating a data model**

(30) Priority: 22.05.2003 CA 2429375
(71) Applicant: Cognos Incorporated, Ottawa, Ontario K1G 4k9 (CA)
(72) Inventor: Potter Charles Mike, Neapean, Ontario K2G 6H4 (CA); Buchler Kamil, Ottawa, Ontario K1V 1S8 (CA); Dachevski Boris, Ottawa, Ontario K1Y 3M4 (CA); Pogrebtsov Alexei, Neapean, Ontario K2J 4T3 (CA)
(74) Representative: HOEGER, STELLRECHT & PARTNER Patentanwälte

(57) **Abstract**

A system for capturing transformations performed against a baseline data model is provided. The system comprises an action interceptor for capturing a transformation performed against the data model, an action logging repository for storing the captured transformation into an action log, and an action log scripting unit for playing the action log against a copy of the baseline data model.

## Description

### FIELD OF THE INVENTION

The invention relates to a system and method of model action logging.

### BACKGROUND OF THE INVENTION

Metadata may be created and amended. Typically, a complete data model is provided to an end user. When an original equipment manufacturer (OEM) creates or updates a model, the model is distributed in its entirety. If an end user customizes the data model, then any updates that the end user receives from the OEM will have to be altered by the end user. The end user will manually re-apply the customization to the updated data model. The manual application of customization changes to updates can be onerous and error-prone.

Often, different authors perform transformations on a given model over longer periods of time. In addition, a model can be segmented and changes to a particular segment could be performed in parallel to changes to a main model. If an underlying data source changes, dependent models are rebuilt manually. Manual re-building of models is tedious and error-prone.

### SUMMARY OF THE INVENTION

It is an object of the present invention to solve one or more of the problems described above.

In accordance with an embodiment of the present invention, there is provided a system for capturing transformations performed against a baseline data model. The system comprises an action interceptor for capturing a transformation performed against the baseline data model, an action logging repository for storing the captured transformation into an action log, and an action log scripting unit for playing the action log against a copy of the baseline data model.

In accordance with another embodiment of the present invention, there is provided a method of model distribution following one or more transformations to a baseline model. The method comprises the steps of recording the transformations into action logs, and distributing the actions logs to end users.

In accordance with another embodiment of the present invention, there is provided a method of model synchronization. The method comprises the steps of recording transformations to a baseline model into an action log, applying time stamps to the transformations in the action log, storing the action log into a repository, and applying the transformations in chronological order based on the time stamps to a copy of the baseline model.

In accordance with another embodiment of the present invention, there is provided a method of model synchronization of changes to a model. The method comprises the steps of recording a model transformation of a baseline model, creating a global transformation sequence of the model transformation, and applying the global transformation sequence is applied to a copy of the baseline model.

In accordance with another embodiment of the present invention, there is provided a computer data signal embodied in a carrier wave and representing sequences of instructions which, when executed by a processor, cause the processor to perform a method of model distribution following one or more transformations to a baseline model. The method comprises the steps of recording the transformations into action logs, and distributing the actions logs to end users.

In accordance with another embodiment of the present invention, there is provided a computer-readable medium having computer readable code embodied therein for use in the execution in a computer of a method of model distribution following one or more transformations to a baseline model. The method comprising the steps of recording the transformations into action logs, and distributing the actions logs to end users.

In accordance with another embodiment of the present invention, there is provided a computer program product for use in the execution in a computer of a system for capturing transformations performed against a baseline data model. The computer program product comprises an action interceptor for capturing a transformation performed against the baseline data model, an action logging repository for storing the captured transformation into an action log, and an action log scripting unit for playing the action log against a copy of the baseline data model.

### BRIEF DESCRIPTION OF THE DRAWINGS

Figure 1 shows an example of an action logging system, in accordance with an embodiment of the present invention.
Figure 2 shows an example of a scenario of model distribution, in accordance with the action logging system.
Figure 3 shows an example of a method of model distribution, in accordance with the action logging system.
Figure 4 shows in a flowchart an example of a method of model synchronization, in accordance with the action logging system.
Figure 5 shows in a flowchart an example of another method of model synchronization, in accordance with the action logging system.
Figure 6 shows another example of an action logging system, in accordance with an embodiment of the present invention.

### DETAILED DESCRIPTION OF THE PREFERRED EMBODIMENTS

A model designer may make modifications (or transformations) to a data model. It is desirable to capture actions (or transformation rules) performed by a model designer, such as a metadata designer. Preferably, these actions are saved externally, inan extensible markup language (XML) format, in action logs. Action logs are further described below. Such action logs can be applied later for automated creation or modification of data models. Action logging forms a basis for other advanced applications, such as data source synchronization and distribution of model changes.

One application of the model action logging system involves the mass distribution of model changes. For example, an original equipment manufacturer (OEM) customer may develop a baseline model and distribute it to many end users. Any change to the baseline model (patches, enhancements) can be propagated to users via action logs. Components include: a) an action capturing module; b) action log(s) complying with a schema that has been devised for this application; and c) an action log (script) player executable that applies action logs to models.

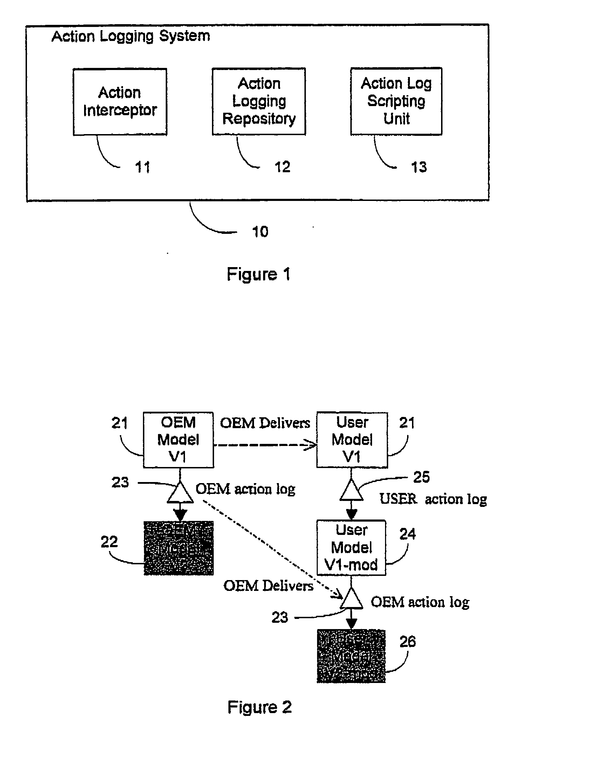

Figure 1 shows an example of an action logging system 10 for capturing transformations performed against an original data model, in accordance with an embodiment of the present invention. The action logging system 10 comprises an action interceptor 11 for intercepting and capturing a transformation performed against the data model, an action log repository 12 for storing the captured transformation into an action log; and an action log scripting unit 13 for playing (or applying) the action log against a copy of the original data model.

Advantageously, the model action logging system allows for the interception and capture of modelling actions, rather than recording static metadata. The advantage of capturing actions (transformation rules) is that these can be applied so that end user customization is preserved. This makes distribution of changes much easier. Another use is so called data source synchronization. When an underlying data source changes, models can be re-created automatically using previously recorded transformation rules (actions).

Another application of the action logging system 10 is in the testing of the host data model application that uses the model action logging system. A unit test is a sequence of transformations (expressed by action logs) to a model. Typically, a developer records such unit tests, thus the result of these transformations is predictable. The result of the recording is a set of action logs and a set of baseline models. The baseline models are set as the correct models of reference. Later, after some software changes, the developer verifies that the modelling tool functions properly by applying the action logs and comparing new resulting models with baseline models. The new resulting models should match with the baseline models.

Proper functioning can be verified by comparing a resulting model with a corresponding baseline model. This process can be automated. For example, a unit test is set of transformations recorded in an action log file. A unit test run invokes a player that applies the action log against a model. Unit test runs can be combined and executed through any number of scripting languages/tools. No human intervention is required to execute such unit tests.

Action logs comply with an XML schema that has been devised for an application. An action log consists of a number of transactions that represent elementary user tasks. For example, a user may decide to publish a model. From the user's perspective, publishing is an indivisible task that will either succeed or fail. Publishing is represented in the action log as a transaction. The transaction contains a number of actions. Actions are primitives that are interpreted by the underlying engine. In the publishing example, the transaction contains an action that creates a package, an action that sets security views on the package, and an action that performs the publishing. Each action is associated with a type and a name. Actions typically contain a number of input and output parameters.

The action logging system 10 makes the processing of distributing data models more flexible. A model creator has the option of sending scripts that create/modify a data model (instead of sending a data model itself). This gives the end user more control over the creation/modification process. For example, the end user can apply only scripts (or their portions) that apply to the user's particular business model. Rather than distributing a complete updated model, incremental model changes can be provided and applied. On a more abstract level, this can be seen as applying rules to modelling. The rules are captured in action logs and can be applied (possibly selectively) by multiple users. The emphasis is not so much on a model, rather on the transformation rules.

The model action logging system 10 gives more control over model distribution to the model author. It also gives more flexibility to the end user- it allows for creation of data models that are specific to the end user business model.

Figure 2 shows an example of a scenario of model distribution 20, in accordance with the action logging system 10. Figure 2 shows a baseline model 21 created from an OEM and delivered to a user. The OEM makes changes to the model 21 to create a second version of the model 22. The OEM changes are recorded in an OEM action log 23. The user may also amend the baseline model 21 to create a modified version 24 of the model. The user changes are recorded in a user action log 25. The OEM action log 23 may be delivered to the user and applied to the modified version 24 of the model to create a modified second version 26 of the model. The modified second version 26 comprises the changes to the model made the both the OEM and the user.

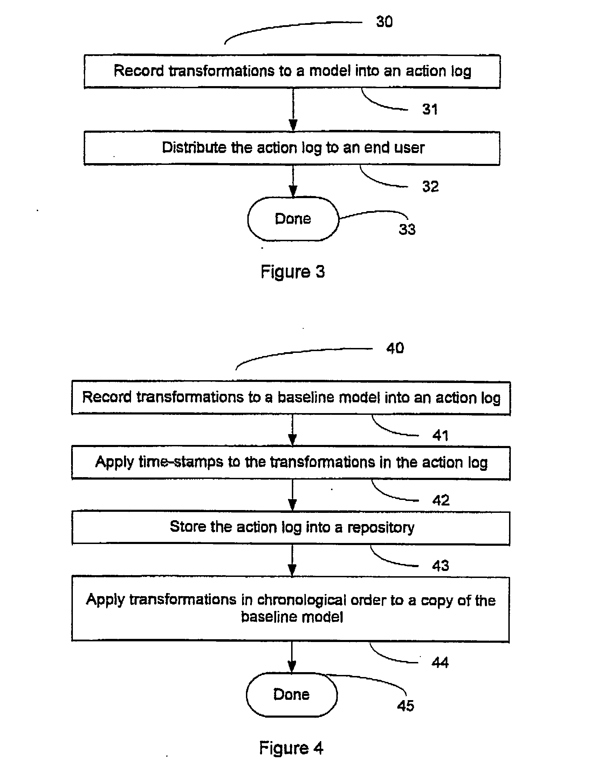

Figure 3 shows a in a flowchart an example of a method of model distribution (30) in accordance with the action logging system 10. Starting from a baseline model, the model author (e.g., an OEM) applies a numbers of transformations (actions) that change the state of the model. These transformations are recorded in an action log (31). Next, the action log is distributed to an end user (32) with appropriate documentation. Appropriate documentation includes a record created by a distributor that documents transformations to the model and provides the user with guidance, especially, if log files could only be applied partially. Once the action log is distributed (32), the method is done (33) and the end user may apply transformations pertinent to their particular business model. This can be a subset, or all transformations. Other steps may be added to the method, including the step of distributing the baseline model to the user.

Often, different authors perform transformations on a given model over a long period of time. In addition, a model can be segmented and changes to a particular segment are performed in parallel to the changes to the main model. If an underlying data source changes, all dependent models have to be rebuilt. Manual re-building of models can be tedious and error-prone. With the action logging system 10, a user can rebuild models automatically with some possible manual intervention if necessary.

Another objective of the present invention is to capture modeling actions with the goal of automated generation of metadata models. Figure 4 shows a flowchart of an example of a method of model synchronization (40), in accordance with the action logging system 10. The method (40) begins with recording changes to a baseline model (41). The recording is performed by action logging system 10. Each transaction recorded in the action log is time-stamped (42). Next, the action logs are stored in the repository 12 (43). Typically, time-stamping (42) occurs as part of the recording (41). The transactions in the action logs are applied in chronological order to a copy of the baseline model (44). The copy of the baseline model in now in synch with the original model and the method (40) is done (45).

Model synchronization provides a mechanism to collect all transformation performed on a model, order them chronologically and apply them to a newly created model. This process will recreate a model, based on a new data source. A user has an opportunity to intervene in this process.

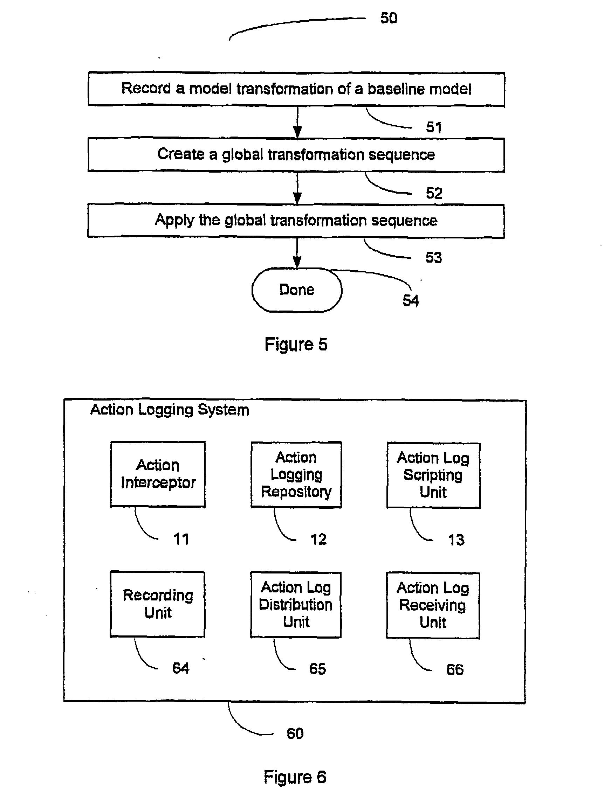

Figure 5 shows a flowchart of another method of model synchronization (50), in accordance with the action logging system 10. The method (50) begins with recording the model transformation (51) into action logs. Next, a global transformation sequence is created (52) in the order of time stamps. Finally, the global transformation sequence is applied to a baseline model (53). The method (50) is done (54).

Figure 6 shows another example of an action logging system 60 for capturing transformations performed against an original data model, in accordance with an embodiment of the present invention. The action logging system 60 comprises an action interceptor 11 for intercepting a transformation performed against the data model, an action logging repository 12 for storing the intercepted transformation into an action log, an action log scripting unit 13 for playing the action log against a copy of the original data model, a recording unit 64 for recording the transformation in the action log and for recording the time of a transformation in the action log, an action log distribution unit 65 for distributing action logs to external systems, and an action log receiving unit 66 for receiving logs from external systems.

The action logging system 10, 60 according to the present invention, along with the methods described above, may be implemented by any hardware, software or a combination of hardware and software having the above described functions. The software code, either in its entirety or a part thereof may be stored in a computer readable memory. Further, a computer data signal representing the software code that may be embedded in a carrier wave may be transmitted via a communication network. Such a computer readable memory and a computer data signal are also within the scope of the present invention, as well as the hardware, software and the combination thereof.

While particular embodiments of the present invention have been shown and described, changes and modifications may be made to such embodiments without departing from the true scope of the invention.

## Claims

1. A system for capturing transformations performed against a baseline data model the system comprising:
an action interceptor for capturing a transformation performed against the baseline data model;
an action logging repository for storing the captured transformation into an action log; and
an action log scripting unit for playing the action log against a copy of the baseline data model.

2. The system as claimed in claim 1, wherein the action logging unit comprises a recording unit for recording the transformation in the action log and for recording the time of a transformation in the action log.

3. The system as claimed in claim 2, wherein the action logging unit further comprises a transformation sequencer for creating a global transformation sequence.

4. The system as claimed in claim 1, further comprising an action log distribution unit for distributing action logs to external systems.

5. The system as claimed in claim 1, further comprising an action log receiving unit for receiving action logs from external systems.

6. The system as claimed in claim 1, wherein the action logs comply with extensible markup language schema.

7. A method of model distribution following one or more transformations to a baseline model, the method comprising the steps of:
recording the transformations into action logs; and
distributing the actions logs to end users.

8. A method of model synchronization, the method comprising the steps of:
recording transformations to a baseline model into an action log;
applying time stamps to the transformations in the action log;
storing the action log into a repository; and
applying the transformations in chronological order based on the time stamps to a copy of the baseline model.

9. A method of model synchronization of changes to a model, the method comprising the steps of:
recording a model transformation of a baseline model;
creating a global transformation sequence of the model transformation; and
applying the global transformation sequence is applied to a copy of the baseline model.

10. A computer data signal embodied in a carrier wave and representing sequences of instructions which, when executed by a processor, cause the processor to perform a method of model distribution following one or more transformations to a baseline model, the method comprising steps of:
recording the transformations into action logs; and
distributing the actions logs to end users.

11. A computer-readable medium having computer readable code embodied therein for use in the execution in a computer of a method of model distribution following one or more transformations to a baseline model, the method comprising steps of:
recording the transformations into action logs; and
distributing the actions logs to end users.

12. A computer program product for use in the execution in a computer of a system for capturing transformations performed against a baseline data model, the computer program product comprising:
an action interceptor for capturing a transformation performed against the baseline data model;
an action logging repository for storing the captured transformation into an action log; and
an action log scripting unit for playing the action log against a copy of the baseline data model.
